# EUROPEAN PATENT APPLICATION

(11) **EP 2 977 944 A1**
(43) Date of publication of application: **27.01.2016**
(21) Application number: 15178049.1
(22) Date of filing: 23.07.2015
(51) Int. Cl.: G06Q 10/08

(54) **SYSTEM AND METHOD FOR CUSTOMS IN-TRANSIT SUPERVISION**

(30) Priority: 23.07.2014 CN 201410353025
(71) Applicant: Tsinghua University, Haidian District Beijing 100084 (CN); Nuctech Company Limited, TongFang Building Shuangqinglu Haidian District Beijing 100084 (CN)
(72) Inventor: CHEN, Zhiqiang, 100084 BEIJING (CN); LI, Yuanjing, 100084 BEIJING (CN); WU, Xianghao, 100084 BEIJING (CN); LIU, Limin, 100084 BEIJING (CN); DAI, Jundi, 100084 BEIJING (CN)
(74) Representative: Delumeau, François Guy

(57) **Abstract**

The disclosure provides a system and a method for customs in-transit supervision. The system comprises: a port clearance subsystem (20) configured to collect and process information of a supervised object at a port; a risk management subsystem (40) configured to determine an in-transit supervision scheme for the supervised object based on a risk level of the supervised object; an in-transit supervision apparatus (10) configured to supervise the supervised object in transit according to the in-transit supervision scheme; and a central supervision subsystem (30) configured to conduct information interaction with the port clearance subsystem, the risk management system and the in-transit supervision apparatus and transmit instructions for controlling the subsystems and the apparatus. By introducing comparison between origin port information and destination port information and a risk management mechanism, the system and the method according to the disclosure improves the specificity, efficiency and intensity of supervision.

## Description

### TECHNICAL FIELD

The disclosure generally relates to the field of in-transit supervision and, more particularly, to a system and a method for customs in-transit supervision.

### BACKGROUND

With the development of economics and the ever-increasing prosperity of import and export trade, tariff revenue contributes a lot to fiscal revenue while becomes the target of many criminals. Efficient and close customs supervision is an important tool for eradiating various illegal behaviors in the import and export trade. As a common supervision approach, customs supervises transferring of goods from a domestic customs port to another customs port where the goods go through import and export customs formalities.

Currently, the customs monitors a supervised vehicle mainly by "fastening" an electronic customs lock at an origin customs port and "examining" the electronic customs lock at a destination customs port and by introducing positioning of the Global Positioning System (GPS). However, in-transit supervision based on the electronic customs lock cannot fully guarantee the security of the supervised goods, GPS-dependent positioning may compromise security and confidentiality, and undifferentiated supervision is of low specificity, high cost and low efficiency.

There is a need for a system and a method for customs in-transit supervision, which can solve at least some of problems in the prior art.

### SUMMARY

An exemplary embodiment of the disclosure provides a system for customs in-transit supervision, comprising:
a port clearance subsystem configured to collect and process information of a supervised object at a port;
a risk management subsystem configured to determine an in-transit supervision scheme for the supervised object based on a risk level of the supervised object;
an in-transit supervision apparatus configured to supervise the supervised object in transit according to the in-transit scheme; and
a central supervision subsystem configured to perform information interaction with the port clearance subsystem, the risk management system and the in-transit supervision apparatus and transmit instructions for controlling the port clearance subsystem, the risk management system and the in-transit supervision apparatus.

According to the exemplary embodiment, the port clearance subsystem comprises:
an origin collection module configured to collect before-transit-information of the supervised object at an origin port;
a destination collection module configured to collect after-transit -information of the supervised object at a destination port; and
a comparison module configured to compare the before-transit-information and the after-transit-information to obtain a comparison result as:
   no occurrence of illegal behavior in transit, if the before-transit-information and the after-transit-information are consist with each other, or
   an occurrence of illegal behavior in transit, if the before-transit-information and the after-transit-information are not consistent with each other.

According to the exemplary embodiment, the risk management subsystem comprises:
an element definition module configured to define which information of the supervised object is used as an element for risk analysis;
a rule definition module configured to define a rule for risk analysis;
a random inspection definition module configured to randomly sample the information of the supervised object using a random algorithm; and
a risk execution module configured to analyze the risk level of the supervised object based on the defined element and the rule and the sampled information of the supervised object and configured to determine the supervision scheme for the supervised object based on the risk level.

According to the exemplary embodiment, the in-transit supervision apparatus comprises:
an in-transit collection module configured to collect in-transit-information of the supervised object;
an in-transit communication module configured to transmit the collected in-transit-information to the central supervision subsystem and receive from the central supervision subsystem an instruction for designating the operation mode; and
an in-transit control module configured to prescribe the operation mode of the in-transit supervision apparatus based on the received instruction.

The in-transit collection module collects at least one of position information, customs lock information, status information and alarm information in the prescribed operation mode, and
the in-transit communication module transmits the collected in-transit-information to the central supervision subsystem in the prescribed operation mode.

According to the exemplary embodiment, the central supervision subsystem analyzes the in-transit-information of the supervised object from the in-transit supervision apparatus, and adjusts the operation mode of the in-transit supervision apparatus based on an analysis result by performing information interaction with the in-transit supervision apparatus.

According to the exemplary embodiment, the supervised object is provided with a marker, the port clearance subsystem collects and processes information of the marker, and a state of the marker is supervised by the in-transit supervision apparatus. By using the information and/or the state of the marker as additional information of the supervised object, it is further judged whether an illegal behavior occurs in transit according to whether the information of the marker is consistent before and after transit and/or whether an abnormal change in the state of the marker occurs in transit.

Another exemplary embodiment of the disclosure provides a method for customs in-transit supervision, comprising:
collecting before-transit-information of a supervised object at an origin port;
analyzing a risk level of the supervised object based on the collected information and determining an in-transit supervision scheme for the supervised object;
supervising the supervised object in transit according to the determined in-transit supervision scheme;
collecting after-transit-information of the supervised object at a destination port and comparing the before-transit-information and the after-transit-information; and
determining whether an illegal behavior occurs in transit based on an in-transit supervision condition and a comparison result.

A further exemplary embodiment of the disclosure provides a port clearance system, comprising:
an origin collection module configured to collect before-transit-information of a supervised object at an origin port;
a destination collection module configured to collect after-transit -information of the supervised object at a destination port; and
a comparison module configured to compare the before-transit-information and the after-transit-information to obtain a comparison result as:
   no occurrence of illegal behavior in transit, if the before-transit-information and the after-transit-information are consist with each other, or
   an occurrence of illegal behavior in transit, if the before-transit-information and the after-transit-information are not consistent with each other.

### BRIEF DESCRIPTION OF THE DRAWINGS

The above and other aspects, features and advantages of the disclosure will become apparent from the following description taken in conjunction with accompanying drawings, wherein like reference numbers refer to like elements.
Figure 1 is a block diagram schematically illustrating a structure of a system for customs in-transit supervision according to an exemplary embodiment of the disclosure;
Figures 2-4 respectively illustrate different arrangements of subsystems of a system for customs in-transit supervision according to exemplary embodiments of the disclosure;
Figure 5 is a flowchart schematically illustrating a method for customs in-transit supervision according to an exemplary embodiment of the disclosure;
Figure 6 is a flowchart illustrating a specific example of a method for customs in-transit supervision according to an embodiment of the disclosure;
Figure 7 is a schematic diagram illustrating modules of subsystems of a system for customs in-transit supervision according to an exemplary embodiment of the disclosure;
Figure 8 is a diagram illustrating interaction among the modules in the exemplary embodiment shown in Figure 7 at an origin startup stage of the system;
Figure 9 is a diagram illustrating interaction among the modules in the exemplary embodiment shown in Figure 7 at a destination comparison stage of the system;
Figure 10 is a flowchart schematically illustrating a tran-customs transit supervision process which is applicable to embodiments of the disclosure.

### DETAILED DESCRIPTION OF EMBODIMENTS

In the following, specific embodiment of the disclosure will be described in detail. It shall be noted that the embodiments described herein are just for illustrating rather than limiting the disclosure. To provide a thorough understanding of the disclosure, many specific details are set forth in the following description. However, it is apparent to those skilled in the art that the disclosure can be embodied without the specific details. In other embodiments, well-known circuits, materials or methods are not described in detail so as not to obscure the disclosure.

Throughout the description, any reference to "one embodiment", "an embodiment", "one example" or "an example" is intended to indicate that a particular feature, structure or characteristic described in connection with the embodiment or example is included in at least one embodiment of the disclosure. Therefore, appearances of such terms in various places throughout the description are not necessarily all referring to the same embodiment or example. In addition, particular features, structures or characteristics may be combined in any suitable manner in one or more embodiments or examples. Those skilled in the art shall appreciate that the term "and/or" used herein refers to any and all combinations of one or more items listed.

In current in-transit supervision systems, supervision is conducted in transit, that is, from an origin to a destination. As long as there is no abnormity (such as deviation from a prescribed route, long-time stop, illegal opening of an electronic customs lock) in transit, it is considered that the transported goods is safe. However, such a supervision approach cannot guarantee the safety of the supervised goods. Nowadays, it has been founded, in a lot of smuggling crimes, that goods are unloaded stealthily in transit by tampering with screws that fasten a lock on the door of a vehicle and with clasps of the door instead of damaging a customs lock. In order to solve at least some of problems in the art, exemplary embodiments of the disclosure propose a concept of extending the chain of in-transit supervision. For example, an X-ray scanning image, physical information (length, width, height; weight), etc. of the supervised object are collected at the origin. At the destination, the X-ray scanning image, physical information (length, width, height; weight), etc. of the supervised object are collected once again and compared with those collected at the origin to judge whether there is a difference therebetween. If the difference exceeds a prescribed threshold, it is judged that an illegal behavior occurs. As such, the definition of in-transit supervision is extended from supervision of illegal behavior in transit to end-to-end control which involves snapshooting and measuring the supervised object at the origin, snapshooting and measuring the supervised object at the destination once again and making a comparison to determine a difference in the supervised object between a start point and an end point. Thus, the conventional definition of in-transit supervision is greatly expanded. The proposed supervision approach combines dynamic supervision with static supervision and makes the theory of in-transit supervision more comprehensive and perfect.

Most of current in-transit supervision systems rely on the GPS positioning system. However, according to exemplary embodiments of the disclosure, an in-transit supervision apparatus may use a different navigation system, such as BeiDou satellite navigation system or some other satellite navigation system.

Current in-transit supervision systems conduct the same supervision for all supervised vehicles, rather than conducting differentiated management for supervised vehicles based on their properties. Thus, the supervision is of low specificity, high cost and low efficiency. In order to solve at least some of problems in the art, the in-transit supervision according to exemplary embodiments of the disclosure introduces a risk management mechanism, whereby a specific in-transit supervision scheme is determined based on properties of a supervised object.

In current in-transit supervision systems, means for in-transit supervision lacks diversity and inflexible. In order to solve at least some of problems in the art, according to exemplary embodiments of the disclosure, the operation mode of an in-transit supervision apparatus is dynamically prescribed by performing information interaction with a supervision center, according to a risk management mechanism and based on conditions of a supervised object, etc.

In the following, exemplary embodiment of the disclosure will be described in conjunction with figures.

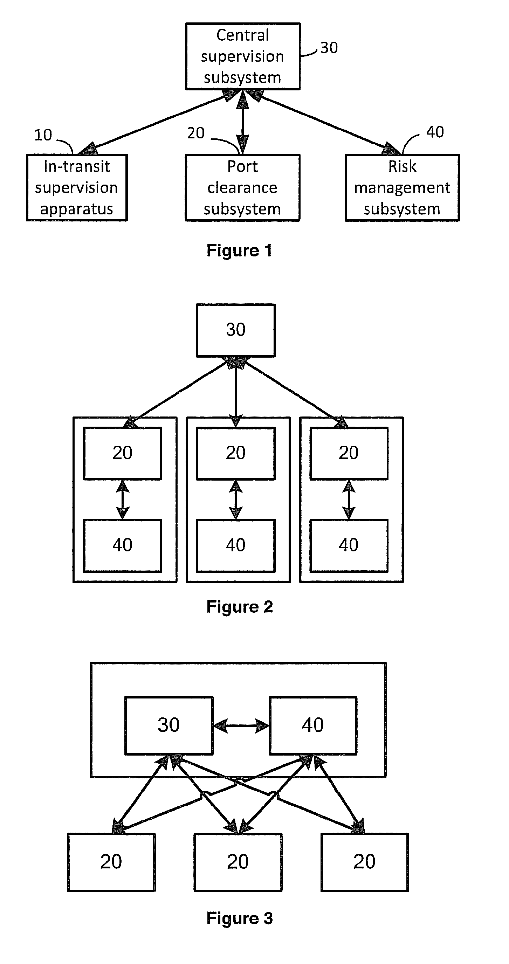

Figure 1 is a block diagram schematically illustrating a structure of a customs in-transit supervision system according to an exemplary embodiment of the disclosure. The customs in-transit supervision system may comprise an in-transit supervision apparatus 10, a port clearance subsystem 20, a central supervision subsystem 30 and a risk management subsystem 40. The port clearance subsystem 20 may collect and process information of a supervised object at a port. Port clearance subsystems 20 may be deployed at respective ports, such as an origin port and a destination port. The risk management subsystem 40 may determine an in-transit supervision scheme for the supervised object based on a risk level of the supervised object, as will be described in detail below. The in-transit supervision apparatus 10 may supervise the supervised object in transit according to the in-transit scheme. Here, the term "in-transit" refers to on the route from the origin port to the destination port, for example. The in-transit supervision apparatus 10 may be deployed at the supervised object to supervise its transportation condition in real time. The central supervision subsystem 30 may be deployed at headquarters to perform information interaction with the port clearance subsystem 20, the risk management subsystem 40 and the in-transit supervision apparatus 10 and transmit instructions for controlling the subsystems and the apparatus. Supervised objects may include various objects which enter or leave ports, such as vehicles, ships and their cargos, etc. For the sake of convenience of description, a supervised object is sometimes simply referred to as a vehicle or goods although the disclosure is not limited thereto.

The customs in-transit supervision system according to the embodiment of the disclosure may have various architectures and especially various different arrangements for the risk management subsystem 40 as illustrated in Figures 2-4. For the sake of clarity, the in-transit supervision apparatus 10 is not illustrated in the Figures. However, the relationship between the in-transit supervision apparatus 10 and other subsystems is easy to understand by referring to Figure 1. Although the number of ports and hence deployed port clearance subsystems shown in Figures 2-4 is three, this is just an example and the disclosure is not limited thereto. Instead, the number may be greater or smaller.

As shown in Figure 2, the central supervision subsystem 30 is deployed at headquarters, each port is provided with a respective port clearance subsystem 20 and a respective risk management subsystem 40 which conduct information interaction with each other directly, the port clearance subsystem 20 may perform information interaction with the central supervision subsystem 30, and the risk management subsystem 40 may perform information interaction with the central supervision subsystem 30 via its corresponding port clearance subsystem 20. Such an arrangement enables each port to be provided with a proprietary risk management subsystem. Each port clearance subsystem may provide collected information of a supervised object to its proprietary risk management subsystem, and may acquire risk assessment information directly from the corresponding proprietary risk management subsystem.

As shown in Figure 3, each port is provided with a respective port clearance subsystem 20, both the risk management subsystem 40 and the central supervision subsystem 30 are deployed at headquarters, and the port clearance subsystem 20 may perform information interaction directly with both the risk management subsystem 40 and the central supervision subsystem 30. Such an arrangement enables the central supervision subsystem 30 and the risk management subsystem 40 to serve the port clearance subsystem 20 simultaneously. Transmission of collected information and acquirement of risk information between the port clearance subsystem 20 and the risk management subsystem 40 do not rely on the central supervision subsystem 30.

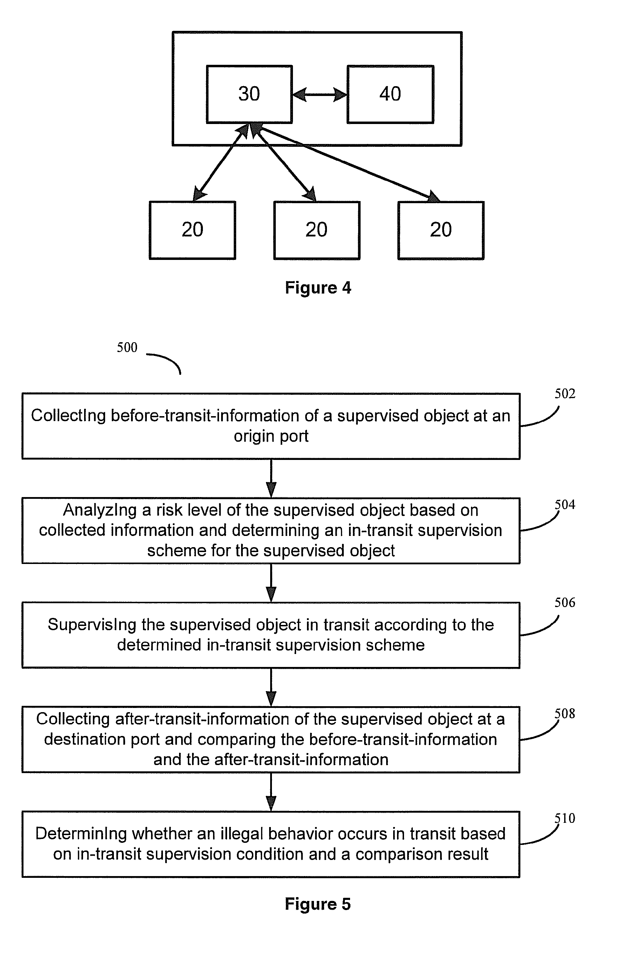

As shown in Figure 4, each port is provided with a respective port clearance subsystem 20, both the risk management subsystem and the central supervision subsystem 30 are deployed at headquarters, and each port clearance subsystem 20 performs information interaction with the risk management subsystem 40 via the central supervision subsystem 30. Such an arrangement enables the central supervision subsystem 30 to serve as a hub, via which collected information is transmitted and risk information is acquired between the port clearance subsystem 20 and the risk management subsystem 40.

Although exemplary arrangements are illustrated, the disclosure is not limited thereto. Any other arrangements those skilled in the art can reasonably conceive of fall within the scope of the disclosure.

According to an exemplary embodiment, the port clearance subsystem 20 may comprise: an origin collection module configured to collect before-transit-information of the supervised object at an origin port; a destination collection module configured to collect after-transit -information of the supervised object at a destination port; and a comparison module configured to compare the before-transit-information and the after-transit-information, judge that no illegal behavior occurs in transit if the before-transit-information and the after-transit-information are consist with each other, and judge that an illegal behavior occurs in transit if the before-transit-information and the after-transit-information are not consistent with each other. For example, an X-ray scanning image, physical information, etc. of the supervised object may be collected at the origin, and an X-ray scanning image, physical information, etc. of the supervised object may be collected at the destination once again and compared with the information collected at the origin to judge whether there is difference therebetween. When the difference exceeds a designated threshold, it is determined that they are not consistent with each other and hence an illegal behavior occurs. By making a comparison to determine a difference in the supervised object between a start point and an end point, end-to-end control in addition to in-transit supervision is achieved and the reliability of in-transit supervision is improved. The modules of the port clearance subsystem 20 may be implemented in various forms. For example, the origin collection module and the destination collection module may be implemented with data collection devices such as Computed Tomography (CT) imaging devices, radiation imaging devices, scanners, cameras, sensors, etc., and the comparison module may be implemented with an electronic device with data processing capability. The port clearance subsystem 20 may further comprise a communication module configured to perform information interaction with other subsystems.

According to an exemplary embodiment, the risk management subsystem 40 may comprise: an element definition module configured to define which information of the supervised object is used as an element for risk analysis; a rule definition module configured to define a rule for risk analysis; a random inspection definition module configured to randomly sample the information of the supervised object using a random algorithm; and a risk execution module configured to analyze the risk level of the supervised object based on the defined element and the rule and the sampled information of the supervised object and configured to determine the supervision scheme for the supervised object based on the risk level. Here, the risk level may be set as required. For example, there may be risk levels such as high, medium or low; or presence or absence of risk; etc. The element definition module and the rule definition module may be set in advance, by default or according to features of the supervised object. By way of example, for goods, its type, country of origin, consigner, etc. may be used as elements for risk analysis. The rule definition module may comprise: a risk rule definition module configured to define risk levels of an element under different conditions (for example, if an enterprise has committed a crime of smuggling, its business is labeled high risk); and a trust rule definition module configured to define a trust rule condition. A business (of a large-scale enterprise which has no record of smuggling, for example) which satisfies the trust rule condition is considered no risk or low risk instead of risky. The modules of the risk management subsystem 40 may be implemented in many ways, for example, by an electronic device with a processor and a user interface device, such as a monitor. A user may define element(s) and rule(s) by entering data via the user interface device, and the monitor enables man-machine interaction by displaying a graphical user interface (GUI) for example. The processor may perform data processing operations, such as random sampling, risk analysis, judgment, etc. The risk management subsystem 40 may further comprise a communication module configured to perform information interaction with other subsystems.

According to an exemplary embodiment, the risk management subsystem 40 may transmit, to the central supervision subsystem 30, the in-transit supervision scheme determined for the supervised object. The central supervision subsystem 30 may designate an operation mode for the in-transit supervision apparatus 10 based on the in-transit supervision scheme. The central supervision subsystem may also analyze the in-transit-information of the supervised object from the in-transit supervision apparatus 10, and adjusts the operation mode of the in-transit supervision apparatus 10 based on an analysis result by performing information interaction with the in-transit supervision apparatus 10. For example, for a supervised object of high risk, it is possible to specify that further information in addition to electronic customs lock, position information, etc. is collected at the in-transit supervision apparatus 10 and transmitted therefrom and that an alarm is triggered in case an abnormal condition occurs. In addition, for a supervised object of high risk, the information collection frequency and the information transmission frequency may be increased in order to perform more close monitoring. For a supervised object of low risk, it may be enough to periodically collect and transmit electronic customs lock, position information, etc. For a supervised object of no risk, the in-transit supervision apparatus 10 may be even set to enter a state where it does not operate. As such, the disclosed system can prescribe the operation mode of the in-transit supervision apparatus differently and dynamically based on risk management, real-time condition of the supervised object, etc., thus improving the efficiency and intensity of supervision.

According to an exemplary embodiment, the in-transit apparatus 10 may comprise: an in-transit collection module configured to collect in-transit-information of the supervised object; an in-transit communication module configured to transmit the collected in-transit-information to the central supervision subsystem and receive from the central supervision subsystem an instruction for designating the operation mode; and an in-transit control module configured to prescribe the operation mode of the in-transit supervision apparatus based on the received instruction. The operation mode may define at least one of an information type, an information collection frequency, an information transmission scheme and an information transmission frequency. For example, the information type may indicate at least one of position information of the supervised object, electronic customs lock information, current status information, alarm information, etc. The in-transit communication module transmits the collected in-transit-information to the central supervision subsystem in the prescribed operation mode. The modules of the in-transit supervision apparatus 10 may be implemented in various forms. For example, the in-transit collection module may comprise a satellite navigation device, a camera, a sensor, an alarm trigger, etc. for collecting a position, an image, physical information of the supervised object, customs lock information, occurrence of an alarm, etc. The in-transit communication module may comprise a communication device that performs information interaction according to any suitable communication scheme, for example, uploads information and download instructions from the central supervision subsystem by means of short messaging. The in-transit control module may be implemented with any suitable electronic device, such as a microprocessor, a microcontroller, etc., for processing information and instructions and controlling the overall operation of the in-transit supervision apparatus 10.

The central supervision subsystem 30 may be a platform for supervising the supervised object and comprise interfaces for the in-transit apparatus 10, the port clearance subsystem 20 and the risk management subsystem 40 to perform information interaction with them and issue instructions to them. The central supervision subsystem 30 may be implemented in various forms, for example, by an electronic device with a processor, a communication device and a user interface device, such as a monitor, which may display the operating state of the entire supervision system, the condition of the supervised object, etc. A user may enter data via the user interface device so as to monitor and control the operation of the entire supervision system by means of the central supervision subsystem 30, and the monitor enables man-machine interaction by displaying a graphical user interface (GUI) for example. The communication device may perform information interaction with the subsystems and the supervision apparatus according to any suitable communication scheme. The processor may perform data processing operations, such as information processing, analysis, judgment, etc.

In the above, exemplary configurations and implementations of the subsystems and apparatus have been disclosed. However, the disclosure is not limited thereto. Any other configurations and implementations those skilled in the art can reasonably conceive of fall within the scope of the disclosure.

According to an exemplary embodiment, the supervised object may be provided with a marker, the port clearance subsystem 20 may collect and process information of the marker, and a state of the marker may be supervised by the in-transit supervision apparatus 10. By using the information and/or the state of the marker as additional information of the supervised object, it is further judged whether an illegal behavior occurs in transit according to whether the information of the marker is consistent before and after transit and/or whether an abnormal change in the state of the marker occurs in transit. For example, the marker may be an object attached to the supervised object or placed somewhere on the supervised object. As the supervised object changes, the position, shape, etc. of the object will also change accordingly, which helps in judging whether there is a difference between the scanning images of the supervised object before and after transit.

Figure 5 is a flowchart schematically illustrating a method for customs in-transit supervision according to an exemplary embodiment of the disclosure. The customs in-transit supervision method 500 may be performed by the system described above with reference to Figure 1. As shown in Figure 5, at step 502, the port clearance subsystem 20 may collect before-transit-information of a supervised object at an origin port. At step 504, the risk management subsystem 40 may analyze a risk level of the supervised object based on collected information and determine an in-transit supervision scheme for the supervised object. At step 506, the in-transit supervision apparatus 10 may supervise the supervised object in transit according to the determined in-transit supervision scheme. At step 508, the port clearance subsystem 20 may collect after-transit-information of the supervised object at a destination port and compare the before-transit-information and the after-transit-information. At step 510, the central supervision subsystem 30 may determine whether an illegal behavior occurs in transit based on in-transit supervision condition and a comparison result.

In an exemplary embodiment, the result of the comparison performed at step 508 may comprise: no occurrence of illegal behavior in transit, in case the before-transit-information and the after-transit-information are consist with each other; and an occurrence of illegal behavior in transit, in case the before-transit-information and the after-transit-information are not consistent with each other.

In an exemplary embodiment, the in-transit supervision condition is based on at least one of position information, customs lock information, status information and alarm information of the supervised object.

In an exemplary embodiment, before analyzing the risk level of the supervised object at step 504, the method may further comprise: defining which information of the supervised object is used as an element for risk analysis; defining a rule for risk analysis; and randomly sampling the information of the supervised object using a random algorithm. The analyzing the risk level of the supervised object may be performed based on the defined element and rule and the sampled information of the supervised object.

In an exemplary embodiment, step 506 may specifically comprise: receiving an instruction for designating the in-transit supervision scheme; setting at least one of an information type, an information collection frequency, an information transmission scheme and an information transmission frequency, according to the received instruction; and collecting and transmitting in-transit-information of the supervised object according to the setting.

In an exemplary embodiment, step 506 may specifically comprise: analyzing the in-transit supervision condition of the supervised object, and dynamically adjusting the in-transit supervision scheme based on an analysis result.

In an exemplary embodiment, the supervised object is provided with a marker. The method 500 may further comprise: collecting and processing information of the marker as information of the supervised object and supervising a state of the marker in transit; and judging whether an illegal behavior occurs in transit according to whether the information of the marker is consistent before and after transit and/or whether an abnormal change in the state of the marker occurs in transit.

Although the steps of the method are illustrated sequentially in Figure 5, the steps may be reordered, combined, subdivided or omitted. Any suitable variants fall within the scope of the disclosure.

In the following, examples of the system and the method for customs in-transit supervision according to embodiments of the disclosure will be described.

The examples involve three layers: a device layer, a port layer and a center layer. The device layer refers to an in-transit supervision apparatus mounted on a supervised vehicle or container. The in-transit supervision apparatus may comprise an information collection module, a satellite navigation module and a communication module. The information collection module may acquire in-transit information of the vehicle or container. The satellite navigation module may acquire position information by means of a satellite navigation system, such as GPS, BeiDou and some other satellite navigation system. By means of short messaging, etc., the communication module serves as a data medium for interaction between the supervision apparatus and the supervision center, so as to upload position information of the vehicle and information of the supervised object and download instructions from the supervision center.

The port layer refers to port clearance subsystems which are the start point and the end point of an in-transit supervision task. At an origin port, the supervised vehicle is guided by a port clearance subsystem to undergo inspection, and information of the vehicle and its cargo is collected. The port clearance subsystem transmits, to the supervision center, the relevant information for use by other ports. The port clearance subsystem invokes a risk management subsystem to judge whether the vehicle needs in-transit supervision. If so, the supervision apparatus is mounted and sealed. When the supervised vehicle arrives at a destination port, it is guided by a port clearance subsystem to undergo inspection once again, and information of the vehicle and its cargo is collected again and compared with the information collected at the origin port. If they are inconsistent with each other, it indicates that the vehicle may have committed an illegal act and need to be further inspected. If they are consistent with each other, the supervision apparatus is examined and unsealed.

The central layer refers to a central supervision subsystem which is a center for storing port inspection and measurement data. It receives position, status, alarm information sent by the supervision apparatus while the vehicle is supervised in transit, checks positions and tracks of all vehicles, and may transmit instructions to the vehicles.

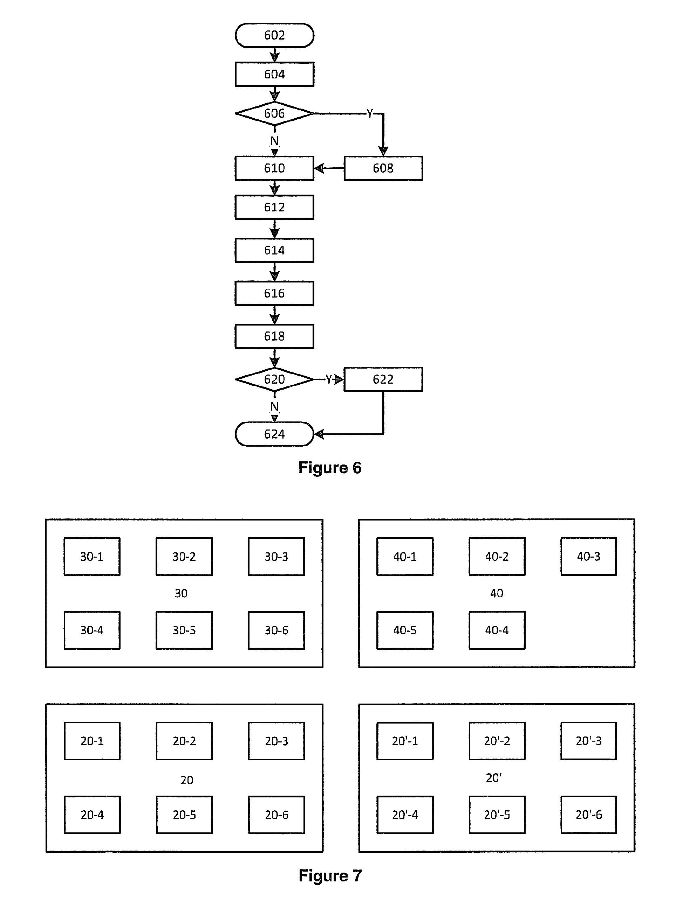

Figure 6 is a flowchart illustrating a specific example of a method for customs in-transit supervision according to an embodiment of the disclosure. The method comprises the following steps.

At step 602, a vehicle is loaded with a cargo container at an origin, and an electronic customs lock is physically fastened.

At step 604, the vehicle arrives at an origin customs supervision port, and a port clearance subsystem controls the vehicle to undergo inspection according to a predefined procedure and meanwhile collects information including a radioactive substance detection result, a license plate identification result, a vehicle measurement result, a vehicle weighing result, an X-ray scanning image, electronic customs lock data, etc.

At step 606, the port clearance subsystem invokes a risk management subsystem to analyze a risk level of the supervised vehicle and to judge whether the risk level is high or low or whether in-transit supervision is needed; if the risk level is high, then the vehicle needs in-transit supervision and the process proceeds to step 608; if the risk level is low or the vehicle is trustable, then the vehicle does not need in-transit supervision and is thus permitted to pass through directly and the process proceeds to step 610.

At step 608, the port clearance subsystem designates a route for the vehicle and seals the supervision apparatus by means of a reader/writer for the supervision apparatus, and the process proceeds to step 610.

At step 610, the supervised vehicle leaves the origin supervision port.

At step 612, the supervision apparatus on the supervised vehicle will transmit position information and customs lock information to a central supervision subsystem according to a prescribed rule, and the central supervision subsystem can obtian positions and tracks of all vehicles and alter information.

At step 614, the central supervision subsystem may interact with the supervision apparatus to dynamically designate a transmission rule for the supervision apparatus.

At step 616, the vehicle arrives at a destination customs supervision port, and a port clearance subsystem controls the supervised vehicle to undergo inspection according to a procedure and meanwhile collects information including a radioactive substance detection result, a license plate identification result, a vehicle measurement result, a vehicle weighing result, an X-ray scanning image, electronic customs lock data, etc.

At step 618, the port clearance subsystem compares this collected information with the information collected at the origin. If they are not consistent with each other, a manual inspection is needed.

At step 620, the port clearance subsystem judges whether the vehicle is equipped with a supervision apparatus. If not, the vehicle is permitted to pass through directly and the process proceeds to step 624; if so, the process proceeds to step 622.

At step 622, the port clearance subsystem examines and unseals the supervision apparatus by means of a reader/writer for the supervision apparatus, and the process proceeds to step 624.

At step 624, the process ends.

In the above method, the order of steps 602, 604, 606, 608 and 610 may be adjusted and some of the steps may be combined, subdivided or omitted, without departing from the scope of the disclosure. In addition, the order of steps 616, 618, 620, 622 and 624 may be adjusted and some of the steps may be combined, subdivided or omitted, without departing from the scope of the disclosure.

In the following, other examples of the system and the method for customs in-transit supervision according to embodiments of the disclosure will be described in conjunction with the arrangement shown in Figure 4.

Figure 7 is a schematic diagram illustrating modules of subsystems of a system for customs in-transit supervision according to an exemplary embodiment of the disclosure. For the sake of clarity and brevity, specific modular configuration of an in-transit supervision apparatus is not shown in the figure. However, those skilled in the art would appreciate that the in-transit supervision apparatus may interact with corresponding modules of a central supervision subsystem. Also, for the sake of clarity and brevity, interaction among the modules is not explicitly illustrated. However, those skilled in the art would appreciate the interaction among the corresponding modules.

In Figure 7, an origin port clearance subsystem 20 comprises: a traffic control module 20-1, a device integration module 20-2, a risk management module 20-3, a data transmission module 20-4, an in-transit supervision module 20-5 and a data comparison module 20-6.

A destination port clearance subsystem 20' comprises: a traffic control module 20'-1, a device integration module 20'-2, a risk management module 20'-3, a data transmission module 20'-4, an in-transit supervision module 20'-5 and a data comparison module 20'-6.

A central supervision subsystem 30 comprises: an electronic customs lock management module 30-1, a data collection module 30-2, a data transmission module 30-3, an in-transit supervision module 30-4, a port supervision module 30-5 and a risk management module 30-6.

A risk management subsystem 40 comprises: a risk element definition module 40-1, a risk rule definition module 40-2, a trust rule definition module 40-3, a random inspection definition module 40-4 and a risk execution module 40-5.

In this example, the above subsystem modules of the in-transit supervision system are divided into four types: basic preparation, origin startup, in-transit supervision and destination comparison.

Modules of the basic preparation type are those that may be configured before the system is used, and include the risk element definition module 40-1, the risk rule definition module 40-2, the trust rule definition module 40-3 and the random inspection definition module 40-4 of the risk management subsystem 40 and the electronic customs lock management module 30-1 of central supervision subsystem 30. These modules may be configured manually by a user or an administrator or may be configured automatically or by default before the system is initiated.

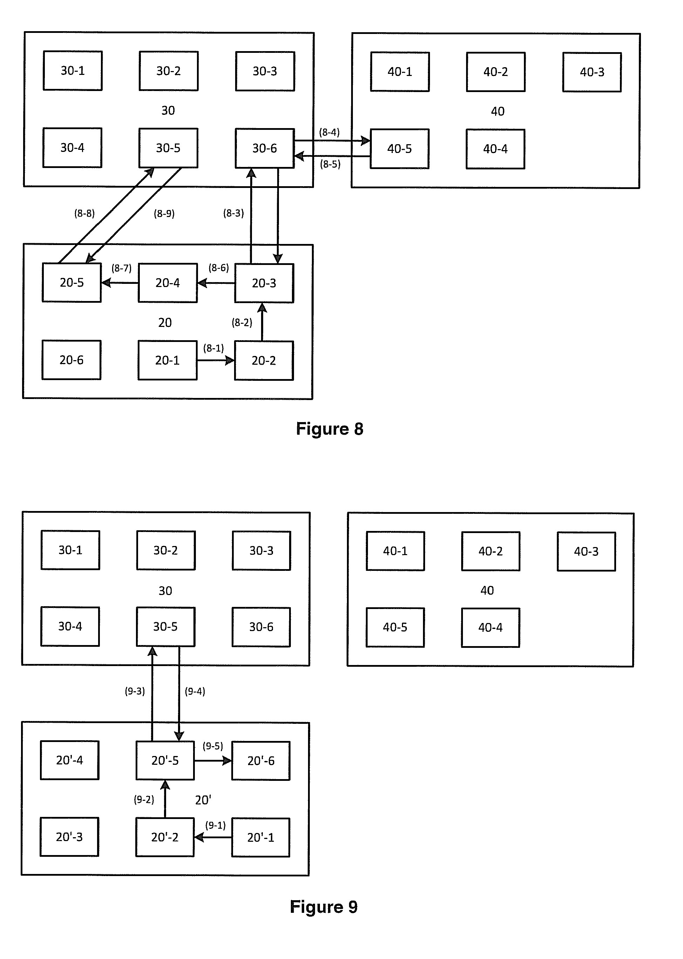

Modules of the origin startup type are those that may be executed at the origin, and include corresponding modules of the origin port clearance subsystem 20, the risk management subsystem 40 and central supervision subsystem 30. These modules and their startups will be described in conjunction with Figure 8. Figure 8 is a diagram illustrating interaction among the modules in the exemplary embodiment shown in Figure 7 at an origin startup stage of the system. The traffic control module 20-1 of the origin port clearance system 20 controls a vehicle to undergo inspection and detection according to a procedure. The device integration module 20-2 collects (8-1) results from various inspection and detection devices, and provides (8-2) the results to the risk management module 20-3. The risk management module 20-3 interacts (8-4, 8-5) with the risk execution module 40-5 of the risk management subsystem 40 via (8-3) the risk management module 30-6 of the central supervision subsystem 30 to obtain a risk judgment result and provide (8-6) the in-transit supervision module 20-4 with the result, whereby the in-transit supervision module 20-4 designates and provides a route, a longest dwell time, a frequency at which the supervision apparatus transmits information, etc. to the data transmission module 20-5. The data transmission module 20-5 interacts with the data transmission module 30-5 of the central supervision subsystem to transmit inspection and detection information, supervision settings, etc.

Modules of the in-transit supervision type are those that are executed in transit from the vehicle's leaving the origin to its arrival at the destination, and include corresponding modules of the in-transit supervision apparatus 10 and the central supervision subsystem 30. For example, the data collection module 30-2 of the central supervision subsystem 30 receives position information, status information, etc. transmitted from the in-transit supervision apparatus 10, and in-transit supervision module 30-4 of the central supervision subsystem 30 tracks position information, route information and alarm information of the supervised vehicle.

Modules of the destination comparison type are those that are executed at the destination, and include corresponding modules of the destination port clearance subsystem 20', the risk management subsystem 40 and the central supervision subsystem 30. These modules and their operations will be described in conjunction with Figure 9. Figure 9 illustrates a diagram illustrating interaction among the modules in the exemplary embodiment shown in Figure 7 at a destination comparison stage of the system. The traffic control module 20'-1 of the destination port clearance subsystem 20' controls the vehicle to undergo inspection and detection according to a procedure. The device integration module 20'-2 collects (9-1) results from various inspection and detection devices, and provides (9-2) the results to the data transmission module 20'-5. The data transmission module 20'-5 interacts (9-3, 9-4) with the data transmission module 30-5 of the central supervision subsystem 30 to receive the inspection and detection information of the vehicle collected at the origin and provide(9-5) the information to the data comparison module 20'-6. The data comparison module 20'-6 compares the information collected at the destination with the information collected at the origin to judge whether there is an illegal behavior.

The order of the modules in Figures 8 and 9 is adjustable. All variants those skilled in the art can conceive of fall within the scope of the disclosure.

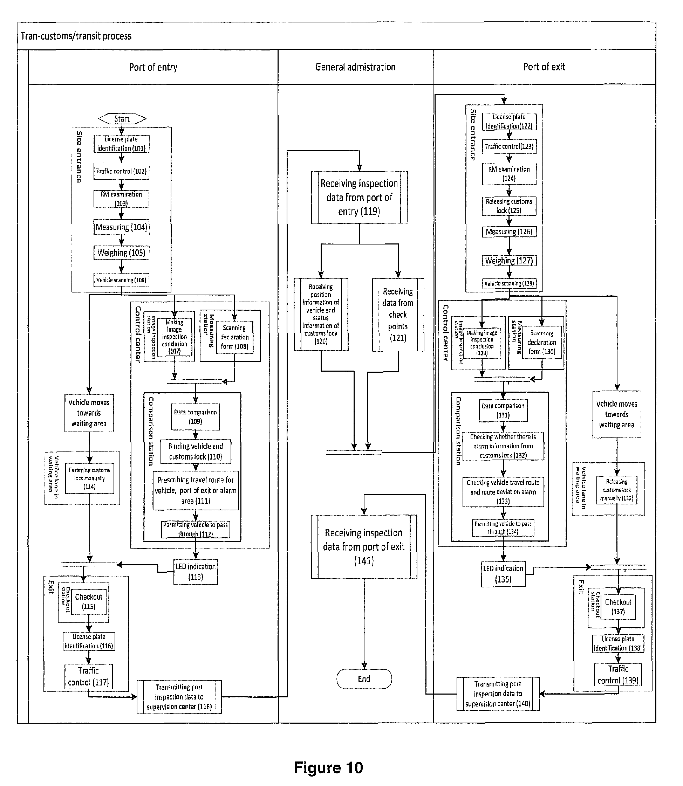

Figure 10 is a flowchart schematically illustrating a tran-customs transit supervision process which is applicable to embodiments of the disclosure. Steps in the figure and their sequence are illustrative. Various variants those skilled in the art can conceive of fall with the scope of the disclosure. In addition, technical contents well-known to those skilled in the art are omitted or described briefly so as not to obscure the disclosure.

Figure 10 illustrates in detail an application of the system and the method for customs in-transit supervision according to the disclosure by taking tran-customs transit supervision as an example. An exemplary process for exercising customs in-transit supervision over a vehicle may be as follows. At an origin customs port, information of the vehicle and goods loaded on the vehicle is acquired, and risk level judgment is performed based on property information of the vehicle and the goods. If the risk level judgment result indicates that supervision is needed or the intensity of supervision is strong, the vehicle is equipped with a sealed supervision apparatus or configured with a supervision apparatus correspondingly. The supervision apparatus transmits information such as position, status, alarm, etc. to a supervision center when the vehicle is in transit. The supervision center obtains position information, route information and alarm information of all supervised vehicles and may adjust or control operation of the supervision apparatus. After the vehicle arrives at a destination customs port, information of the vehicle and the goods is acquired again and compared with the information acquired at the origin customs port to judge whether there is an illegal behavior. In the following, detailed steps of the process are described.

At step 101, the vehicle arrives at a port of entry, and a license plate identification module identifies the license plate of the vehicle.

At step 102, a port traffic control module judges whether there is a vehicle being scanned at site, waits if so and controls the traffic light to turn green and the barrier bar to rise if not.

At step 103, a radiation protection examination (RM) module measures radiation emitted from the vehicle to determine whether it is excessive, and sends out an audible and visible alarm if so.

At step 104, a measurement module measures the length, width and height of the vehicle.

At step 105, a weighting module weighs the vehicle.

At step 106, a vehicle scanning module generates an X-ray scanning image by scanning the vehicle with X-rays.

At step 107, an image inspection module makes an inspection conclusion based on the image.

At step 108, a declaration form scanning module scans a declaration form.

At step 109, a comparison is made between data measured at site and data on the declaration form, after steps 107 and 108.

At step 110, a comparison station binds a customs lock, the vehicle and a container number together.

At step 111, the comparison station prescribes a travel route for the vehicle, a port of exit or an alarm area.

At step 112, the comparison station makes a conclusion that the vehicle is permitted to pass through.

At step 113, the traffic control module controls a light-emitting diode (LED) to indicate the permission to pass through.

At step 114, a worker at site fastens the customs lock mechanically and physically.

At step 115, a checkout station prints an inspection certificate.

At step 116, an exit license plate identification module detects that the vehicle is ready to leave.

At step 117, if inspection has been completed for the vehicle so that it can leave, then the traffic control module controls an exit barrier bar to rise and the vehicle is permitted to pass through.

At step 118, inspection data is transmitted to a supervision center.

At step 119, the supervision center receives inspection data from the port of entry.

At step 120, the supervision center receives position information of the vehicle and status information of the customs lock. If a deviation from the prescribed route occurs or the customs lock is illegally opened, an alarm will be generated.

At step 121, the supervision center receives data from checkpoints.

At step 122, the vehicle arrives at a port of exit, and a license plate identification module identifies the license plate of the vehicle.

At step 123, a port traffic control module judges whether there is a vehicle being scanned at site, waits if so and controls the traffic light to turn green and the barrier bar to rise if not.

At step 124, a radiation protection examination (RM) module measures radiation emitted from the vehicle to determine whether it is excessive, and sends out an audible and visible alarm if so.

At step 125, the customs lock is electronically released with a radio frequency identification (RFID).

At step 126, a measurement module measures the length, width and height of the vehicle.

At step 127, a weighting module weighs the vehicle.

At step 128, a vehicle scanning module generates an X-ray scanning image by scanning the vehicle with X-rays.

At step 129, an image inspection module makes an inspection conclusion based on the image.

At step 130, a declaration form scanning module scans the declaration form.

At step 131, a comparison is made between the inspection data from the port of entry and the inspection data from the port of exit, after steps 129 and 130. This involves a comparative analysis of the scanning images.

At step 132, it is checked whether there is alarm information from the customs lock.

At step 133, the travelling track of the vehicle is checked and it is judged whether there is a route deviation alarm.

At step 134, a comparison station makes a conclusion that the vehicle is permitted to pass through.

At step 135, the traffic control module controls a light-emitting diode (LED) to indicate the permission to pass through.

At step 136, a worker at site releases the customs lock mechanically and recycles the customs lock.

At step 137, a checkout station prints an inspection certificate.

At step 138, an exit license plate identification module detects that the vehicle is ready to leave.

At step 139, if inspection has been completed for the vehicle so that it can leave, then the traffic control module controls an exit barrier bar to rise and the vehicle is permitted to pass through.

At step 140, the inspection data is transmitted to the supervision center.

At step 141, the supervision center receives the inspection data from the port of exit and binds it with the inspection data from the port of entry.

The system and the method for customs in-transit supervision have various advantages. In the prior art, customs supervision over an in-transit vehicle is blind. There is no theoretic and systematic guidance on whether to supervise a vehicle and how to supervise the vehicle, thus leading to aimless and less effective supervision. Means for in-transit supervision lacks diversity, and simply involves judging whether the vehicle deviates from a prescribed route, whether the vehicle stops for a long time, whether a customs lock is opened illegally. Such an approach of supervising illegal behavior in transit cannot guarantee the safety of the supervised goods. Nowadays, it has been founded, in a lot of smuggling crimes, that goods are tampered with without damaging a customs lock. In addition, in most of current in-transit supervision systems, GPS is used for positioning and navigation. This impedes the popularization of those systems, because some user would not use them for the sake of security. By introducing the idea of risk management and directing in-transit supervision based on risk, the system and method for customs in-transit supervision according to the disclosure promotes the concept and methodology of supervision and improves the specificity of supervision, thereby greatly easing the shortage of resources for supervision. Also, the definition of in-transit supervision is extended from supervision of illegal behavior in transit to end-to-end control which involves making a comparison to determine a difference in a supervised object between a start point and an end point. Thus, the conventional definition of in-transit supervision is expanded and improved. The proposed supervision approach combines dynamic supervision with static supervision and makes the theory of in-transit supervision more comprehensive and perfect.

In the above, various embodiments of a system and a method for customs in-transit supervision have been described in detail by way of block diagrams, flowcharts and/or examples. Those skilled in the art shall appreciate that functions and/or operations in the block diagrams, flowcharts or examples may be implemented individually and/or jointly in hardware, software, firmware or substantively any combination thereof. In an embodiment, some elements of the disclosed subject matter may be implemented by an application-specific integrated circuit (ASIC), a field programmable gate array (FPGA), a digital signal process (DSP) or in some other integrated format. However, those skilled in the art shall appreciate that some aspects of embodiments disclosed herein may be entirely or partially implemented equally in an integrated circuit, as one or more computer programs run on one or more computers (for example, one or more programs run on one or more computer systems), as one or more programs run on one or more processors (for example, one or more programs run on one or more microprocessors), as firmware or substantively as any combination thereof. Those skilled in the art would also be able to design circuits and/or write software and/or firmware code according to the disclosure. In addition, those skilled in the art would appreciate that the mechanism of the disclosed subject matter can be distributed as various forms of program products. Regardless of the specific type of signal carrying medium that is actually used for distribution, it is suitable for all exemplary embodiments of the disclosed subject matter. Examples of signal carrying medium include but are not limited to recordable medium such as a floppy disc, a hard disk driver, a compact disc (CD), a digital versatile disc (DVD), a digital cassette, a computer storage, etc. and transmission medium such as digital and/or analog communication medium (for example an optical fiber cable, a waveguide, a wired communication link, a wireless communication link, etc.)

Although the disclosure has been described with reference to several typical embodiments, it shall be appreciated that terms used herein are illustrative, descriptive and non-limiting terms. As the disclosure can be embodied in various forms without departing from the spirit or scope of the disclosure, it shall be appreciated that the above-described embodiments are not limited to any detail set forth above but shall be interpreted broadly within the spirit and scope defined by appended claims. The appended claims intend to cover all modifications and changes falling within the scope of the appended claims and equivalents thereof.

## Claims

1. A system for customs in-transit supervision, comprising:
a port clearance subsystem (20) configured to collect and process information of a supervised object at a port;
a risk management subsystem (40) configured to determine an in-transit supervision scheme for the supervised object based on a risk level of the supervised object;
an in-transit supervision apparatus (10) configured to supervise the supervised object in transit according to the in-transit supervision scheme; and
a central supervision subsystem (30) configured to perform information interaction with the port clearance subsystem, the risk management system and the in-transit supervision apparatus and transmit instructions for controlling the port clearance subsystem, the risk management system and the in-transit supervision apparatus.

2. The system according to claim 1, wherein the port clearance subsystem comprises:
an origin collection module configured to collect before-transit-information of the supervised object at an origin port;
a destination collection module configured to collect after-transit -information of the supervised object at a destination port; and
a comparison module configured to compare the before-transit-information and the after-transit-information to obtain a comparison result as:
no occurrence of illegal behavior in transit, if the before-transit-information and the after-transit-information are consistent with each other, or
an occurrence of illegal behavior in transit, if the before-transit-information and the after-transit-information are not consistent with each other.

3. The system according to claim 1, wherein
each port is provided with a respective port clearance subsystem, the risk management subsystem and the central supervision subsystem are deployed at headquarters, and each port clearance subsystem performs information interaction with the risk management subsystem via the central supervision subsystem; or
each port is provided with a respective port clearance subsystem and a respective risk management subsystem, which perform information interaction with each other directly; or
each port is provided with a respective port clearance subsystem, the risk management subsystem and the central supervision subsystem are deployed at headquarters, and each port clearance subsystem perfroms information interaction with the risk management subsystem directly.

4. The system according to claim 3, wherein the risk management subsystem comprises:
an element definition module configured to define which information of the supervised object is used as an element for risk analysis;
a rule definition module configured to define a rule for risk analysis;
a random inspection definition module configured to randomly sample the information of the supervised object using a random algorithm; and
a risk execution module configured to analyze the risk level of the supervised object based on the defined element and the rule and the sampled information of the supervised object and configured to determine the supervision scheme for the supervised object based on the risk level.

5. The system according to claim 1, wherein the risk management subsystem transmits, to the central supervision subsystem, the in-transit supervision scheme determined for the supervised object, and
the central supervision subsystem designates an operation mode for the in-transit supervision apparatus based on the in-transit supervision scheme.

6. The system according to claim 5, wherein the in-transit supervision apparatus comprises:
an in-transit collection module configured to collect in-transit-information of the supervised object;
an in-transit communication module configured to transmit the collected in-transit-information to the central supervision subsystem and receive from the central supervision subsystem an instruction for designating the operation mode; and
an in-transit control module configured to prescribe the operation mode of the in-transit supervision apparatus based on the received instruction.

7. The system according to claim 6, wherein the operation mode defines at least one of an information type, an information collection frequency, an information transmission scheme and an information transmission frequency,
the in-transit collection module collects at least one of position information, customs lock information, status information and alarm information in the prescribed operation mode, and
the in-transit communication module transmits the collected in-transit-information to the central supervision subsystem in the prescribed operation mode.

8. The system according to claim 6, wherein the central supervision subsystem analyzes the in-transit-information of the supervised object from the in-transit supervision apparatus, and adjusts the operation mode of the in-transit supervision apparatus based on an analysis result by performing information interaction with the in-transit supervision apparatus.

9. The system according to claim 1, wherein the supervised object is provided with a marker, the port clearance subsystem collects and processes information of the marker, and a state of the marker is supervised by the in-transit supervision apparatus.

10. The system according to claim 9, wherein by using the information and/or the state of the marker as additional information of the supervised object, it is further judged whether an illegal behavior occurs in transit according to whether the information of the marker is consistent before and after transit and/or whether an abnormal change in the state of the marker occurs in transit.

11. A method for customs in-transit supervision, comprising:
collecting (502) before-transit-information of a supervised object at an origin port;
analyzing (504) a risk level of the supervised object based on the collected information and determining an in-transit supervision scheme for the supervised object;
supervising (506) the supervised object in transit according to the determined in-transit supervision scheme;
collecting (508) after-transit-information of the supervised object at a destination port and comparing the before-transit-information and the after-transit-information; and
determining (510) whether an illegal behavior occurs in transit based on in-transit supervision condition and a comparison result.

12. The method according to claim 11, further comprising: before analyzing the risk level of the supervised object,
defining which information of the supervised object is used as an element for risk analysis;
defining a rule for risk analysis;
randomly sampling the information of the supervised object using a random algorithm,
wherein the analyzing the risk level of the supervised object comprises:
analyzing the risk level of the supervised object based on the defined element and rule and the sampled information of the supervised object.

13. A port clearance system, comprising:
an origin collection module configured to collect before-transit-information of a supervised object at an origin port;
a destination collection module configured to collect after-transit -information of the supervised object at a destination port; and
a comparison module configured to compare the before-transit-information and the after-transit-information to obtain a comparison result as:
no occurrence of illegal behavior in transit, if the before-transit-information and the after-transit-information are consist with each other, or
an occurrence of illegal behavior in transit, if the before-transit-information and the after-transit-information are not consistent with each other.

14. The port clearance system according to claim 13, wherein if a difference between the before-transit-information and the after-transit-information is greater than a predetermined threshold, it is judged that they are not consistent with each other; and if the difference between the before-transit-information and the after-transit-information is not greater than the predetermined threshold, it is judged that they are consistent with each other.

15. The port clearance system according to claim 13, wherein the supervised object is provided with a marker,
the origin collection module and the destination collection module respectively collect before-transit-information of the marker and after-transit-information of the marker as the information of the supervised object, and
the comparison module compares the before-transit-information of the marker and the after-transit-information of the marker to obtain the comparison result.
